(19)

Europäisches
Patentamt
European
Patent Office
Office européen
des brevets

(11) **EP 4 235 416 A1**

(12) **EUROPEAN PATENT APPLICATION**

(43) Date of publication:
 **30.08.2023   Bulletin 2023/35**

(21) Application number: **22158554.0**

(22) Date of filing: **24.02.2022**

(51) International Patent Classification (IPC):
 *G06F 9/48* *(2006.01)*

(52) Cooperative Patent Classification (CPC):
 **G06F 9/4881**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(71) Applicants:
 • **HENSOLDT Sensors GmbH
  82024 Taufkirchen (DE)**
 • **Fraunhofer-Gesellschaft zur Förderung
  der angewandten Forschung e.V.
  80686 München (DE)**

(72) Inventors:
 • **Lamprecht, Matthias
  89073 Ulm (DE)**

 • **Fischer, Christoph
  89231 Neu-Ulm (DE)**
 • **Rüting, Felix
  89073 Ulm (DE)**
 • **Charlish, Alexander Brendan
  53343 Wachtberg-Werthhoven (DE)**
 • **Hoffmann, Folker
  53343 Wachtberg-Werthhoven (DE)**
 • **Degen, Christoph
  53343 Wachtberg-Werthhoven (DE)**
 • **Vollweiter, Christoph
  53343 Wachtberg-Werthhoven (DE)**

(74) Representative: **LifeTech IP
 Spies & Behrndt Patentanwälte PartG mbB
 Elsenheimerstraße 47a
 80687 München (DE)**

(54)    **APPARATUS AND METHOD FOR MANAGING RESOURCES OF A MULTIFUNCTIONAL RADIO
 FREQUENCY SYSTEM**

(57)    An apparatus (100) for managing resources of a multifunctional radio frequency, RF, system (50) is disclosed. The RF system (50) is designed to carry out various tasks (200). The apparatus comprises a selection module (110), a fusion module (120), and a resource allocation module (130). The selection module (110) is configured to select candidate tasks (220) from the various tasks (200), the candidate tasks (220) being suitable to be fused into a fused task (240). The fusion module (120) is configured to fuse the candidate tasks (220) into the fused task (240). The resource allocation module (130) is configured to generate one or more jobs (J) to perform the fused task (240) and to allocate at least one resource to execute the one or more jobs (J), wherein the jobs (J) are associated with parameter values (p) which are set for their execution.

Fig. 1

**Description**

The present invention relates to an apparatus and a method for managing resources of a multifunctional radio frequency, RF, system and, in particular, to fused tasks for a more efficient resource management in RF systems such as (multifunctional) radar devices.

BACKGROUND

One problem in managing resources relates to multiple parallel tasks that compete with each other for limited shared resources. Resource management algorithms are utilized to allocate the resources to tasks such that the limited available resources are used as effectively as possible with respect to specified goals and objectives.

For the exemplary radar function of search, a task may describe an area or volume where a search for objects or targets should be performed as well as a desired performance (e.g. the detection range for a given target class) that should be achieved. The corresponding jobs may include the values of relevant hardware parameters like e.g. pulse length, beam pattern and transmit power which are used to physically execute the radar search at a given instant in time.

Conventional resource management systems generate a sequential timeline of execution times for jobs, fulfilling the different tasks. However, under conditions often fulfilled in realistic systems, the sequential timeline is a non-optimum resource allocation. For example, in these approaches a higher-level radar (resource) manager produces first those jobs, and, afterwards, a function tries to fuse the jobs by transmitting pulses in the idle time of other jobs. The original radar job is created, however, independently from the other jobs and therefore has only its own objective. Moreover, the jobs require known receive times, which are typically only known for communication tasks and radar tasks as tracking tasks or in A/G modes (A/G = air to ground). In many conventional resource management systems no attempt is made to fuse jobs in order to save resources.

The sequential timeline execution of jobs, however, does not exploit the available resources effectively enough and thus there is a demand for an apparatus that is able to manage the resources more effectively and improves an execution performance of tasks. Solving this on the scheduler level does not allow adapting the jobs to make them feasible for interleaving or replace them by a single joint job. Therefore, there is a demand for a fusion on a higher level (task level).

SUMMARY OF THE INVENTION

At least some of the above-mentioned problems are solved by an apparatus for managing resources of a multifunctional RF system according to claim 1 and a corresponding method according to claim 12. The dependent claims refer to further advantageous realizations for the subject matters of the independent claims.

The present invention relates to an apparatus for managing resources of a multifunctional radio frequency, RF, system. The RF system is designed to carry out various tasks. The apparatus comprises: a selection module, a fusion module, and a resource allocation module. The selection module is configured to select candidate tasks from the various tasks, wherein the candidate tasks are suitable to be fused into a fused task. The fusion module is configured to fuse the candidate tasks into the fused task. The resource allocation module is configured to generate one or more jobs to perform the fused task and to allocate at least one resource to execute the one or more jobs, wherein the jobs are associated with parameter values which are set for their execution.

According to embodiments, the multifunctional RF system shall in particular be able to perform radar task. In other words, the multifunctional RF system may be multifunctional radar system with a radar device. However, the radar device may be configured to perform not only radar tasks, but may also provide other functions such as jamming, communications, ECM (electronic counter measures), ESM (electronic support measures) and others. Therefore, the RF system shall not be limited on devices that provide only a single function (such communication or data transmission) but shall include all RF devices that provide multiple, different functions, wherein functions such as radar search and radar tracking may be of particular importance. The apparatus shall also be suitable to used with a single function system.

The various tasks are in general different tasks, which need different amounts of one or more resources to achieve a desired purpose of the tasks, whereas the jobs may use the same resources during their execution. It should be understood that the term "module" may not only refer to a hardware unit that was manufactured for the defined purpose, but may also denote a unit that is implemented by installed software to perform the defined function.

Optionally, the apparatus further comprises a task acquisition unit configured to provide the various tasks by at least one of the following:

- generating one or more tasks (e.g. tasks which did not exist before),
- updating one or more (existing) tasks,
- deleting one or more tasks from a list of available tasks (e.g. which have been completed in a previous round of execution).

Optionally, the apparatus further comprises a scheduler configured to schedule the jobs based on the associated parameter values. The parameter values may specify settings for the hardware used to execute the job, but also the possible time interval of execution, which is used by the scheduler in order to assign the execution time. It is understood that a job maybe a single act such as an emission of a signal at a given time, another job may be a reception of a corresponding echo. However, exemplary radar emission and radar reception may also be part of one job. Therefore, in contrast to tasks, jobs maybe defined as acts that are "exhausted" after their execution. They are executed only once. Of course, jobs can be repeated, but since it has a different time parameter, it is actually a different job. Optionally, the fusion module is further configured to fuse the candidate tasks based on a utility function or a cost function. It is understood that the utility function defines a benefit of an act. Its maximization maximizes the advantages of the setup. The cost function defines an effort (or cost) needed for the act. Its minimization minimizes the disadvantages of setup.

Optionally, the selection module and/or fusion module are further configured to select the candidate for fusing or to process the fusing of the selected candidate tasks based on at least one of the following:

- a rule defining that a predetermined value of one of the parameters is reached or another event has occurred (an event may be defined as an act or conditions fulfilled at a particular time),
- an optimization of a quality of service based on a utility for a predefined time interval,
- an optimization of a quality of service based on a time-dependent utility,
- a matching analysis of a graph or of a clique included in the graph, when the tasks are grouped in a graph,
- any other optimizer.

Each of the tasks may be associated with a task priority and/or a task objective. Then, optionally, the fusion module is configured to define a new priority and/or a new objective for the fused task, which differ from the task objective and/or from the task priority. The task priority and/or the task objective may also remain unchanged.

Optionally, the fusion module is further configured to fuse a first task with a second task by:

- performing a signal modulation based on a carrier signal and a modulation signal, wherein the carrier signal is associated with the first task and the modulation signal is associated with the second task, and/or
- signal multiplexing for first signals associated with the first task and second signals associated with the second task, wherein the multiplexing may be at least one of the following: time multiplexing, frequency multiplexing, spatial multiplexing (e.g. using different transmit and receive antennas), code multiplexing, phase multiplexing.

According to further embodiments, the fusion module may be configured to fuse a first task with a second task based on the characteristics of the two tasks. The common job for the two tasks may include one common waveform to fulfil both tasks. Therefore, according to embodiments, the task fusion is achieved by generating a common waveform of an RF signal, wherein the RF signal is characterized by one or more parameters. The generation of the common waveform may be based on the parameter values (e.g. of the first and second task). Optionally, the generation of the common waveform may also be done by adapting at least one of the following parameter values: a pulse repetition frequency, a center frequency, a frequency bandwidth, a polarization, a pulse modulation, a pulse length, a number of pulses, a radiated power and peak power, a revisit interval, an earliest time for execution, a desired time for execution, a latest time for execution, a beam shape, a beam direction, a subarray-structure, an amplification on receive. This adaption may be done with the aim to fuse the first and second task. However, according to further embodiments, the generation of the common waveform is performed without changing the parameter values defining the RF signals of first task or the second task.

Both operations (modulation and/or waveform adaption, multiplexing) may be regarded as parallel operations, because the second task may start before the first task is finalized - in contrast to serial operation, where the second task would be performed after finalizing the first task. However, this does not necessarily mean that the corresponding jobs are executed simultaneously. For example, when a time multiplexing is used, the jobs are executed alternatingly or in an interleaving way. It is understood, the defined operations limit also the RF system that can be used (e.g. for frequency multiplexing the RF system has to be able change the frequencies accordingly).

For example, according to further embodiments, one of the parameter values may define a waveform which is transmitted by the RF system and which is utilized to perform the candidate task (examples were defined above). Then, optionally, the resource allocation module is further configured to modify the respective parameters associated with the fused task to enable an interleaved and/or a sequential execution of the jobs generated to perform the fused task. It is understood, the objective and/or the priority of the task does not need to change when changing the parameters. The parameters may change, however, the concrete utilized exemplary radar beam (e.g. the repetition frequency/waveform).

Optionally, the resource allocation module is further configured to associate as parameter values with at least one of the following:

- an indication to operate the RF system in a pulsed or continuous operation mode,
- a repetition frequency,
- a length or duration of a signal train,
- an idle time between subsequent transmissions,
- an aperture of the RF system,
- a beam width of a transmitted radar beam,
- an azimuth angle and/or an elevation angle of a main lobe.

Optionally, when associating or modifying parameter values, the resource allocation module is configured to trade off a possibly lower quality of fused candidate tasks with the overall efficiency in performing all tasks. For example, by changing the parameters, the separate tasks may be performed with lower quality. However, only by changing the parameters, it may become possible to fuse the task with other tasks. Thus, a compromise between efficiency (to exploit the capabilities of the RF system maximally) and quality of the separate tasks, may increase the overall throughput of the system.

Optionally, the selection module is configured to select the candidate tasks from a list of tasks including one or more of the following tasks:

- an active search for objects or targets (e.g. in a particular region or volume),
- a passive search for objects or targets (e.g. in a particular region or volume),
- an active tracking of objects or targets,
- a passive tracking of objects or targets,
- a jamming of targets,
- an electronic countermeasure,
- a communication (e.g. to a friendly participant).

Thus, multifunctional radar systems are particularly suitable to be used in embodiments. Such multifunctional radar systems might be able to perform the various tasks such mentioned above.

However, it is understood that selecting candidate tasks and fusing different tasks may need a significant amount of (computational) resources. Therefore, according to further embodiments, the apparatus may be configured to limit a number of candidate tasks to be fused or to allow fusing only for a predetermined number of candidates (e.g. only two or at most three).

Embodiments relate also to a method for managing resources of a multifunctional RF system, wherein the RF system is designed to perform various tasks. The method comprises the steps:

- selecting candidate tasks from the various tasks, wherein the candidate tasks are suitable to be fused into a fused task;
- fusing the candidate tasks into the fused task;
- generating one or more jobs to perform the fused task; and
- allocating at least one resource to execute the one or more jobs,

wherein the jobs are associated with parameter values which are set for their execution.

According further embodiments the above described functions of the apparatus may be realized as further optional method steps. In addition, it is understood that the order of steps can be different as long as a desired effect is achieved.

This method or at least some steps may also be implemented in software or a computer program product. Therefore, embodiments of the present invention can, in particular, be implemented by software or as a software module in a control unit (e.g. of the RF system) or any other data processing device. Therefore, embodiments relate also to a computer program product having a program code for performing the method, when the computer program is executed on a processor. In addition, further embodiments relate to a computer-readable storage medium comprising instructions which, when executed by a data processing machine, cause the machine to perform the above-defined method or parts thereof.

Embodiments provide various advantages. For example, for the following two situations a fusion and hence an interleaving or parallel task execution is beneficial: (i) A job generated from a task comprises idle times, which can be used by other jobs associated to other tasks. This interleaving can be improved by the adjustment of the parameters. (ii) Both tasks can be executed by one job with a common waveform. Exploiting task relations can lead to improved performance. Due to these two conditions, tasks can be fused, leading to a more efficient usage of the resources, which is even advisable and beneficial for future RF systems operating in a contested and congested environment.

In comparison to the conventional fusing of jobs, embodiment implement a fusing of tasks. This means, the fusion is performed on a higher level which especially allows to create jobs which are optimized for multiple tasks, instead of only for one single task. The proposed approach also allows for the fusion of not only tracking tasks, but also of search and tracking tasks or of other task types. Embodiments also combine radar functionality and communication tasks in the same system. But embodiments show a more extensive functionality by fusing not only radar and communication, but also ECM (electronic counter measures) and ESM (electronic support measures) and others.

BRIEF DESCRIPTION OF THE DRAWINGS

Various embodiments of the present invention will be described in the following by way of examples only, and with respect to the accompanying drawings, in which:

Fig. 1          depicts an apparatus for managing resources of a multifunctional RF system according to an embodiment.
Fig. 2          illustrates objects and functions according to embodiments in comparison with a conventional resource management system.
Fig. 3          depicts another embodiment for the apparatus with more optional components.
Fig. 4          provides a schematic illustration of exemplary executions of two types of jobs.
Figs. 5A-5C     depict an implementation via graphs within embodiments.
Fig. 6          shows a schematic flow chart for a method for managing resources of a multifunctional RF system according to an embodiment.

DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail.

It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

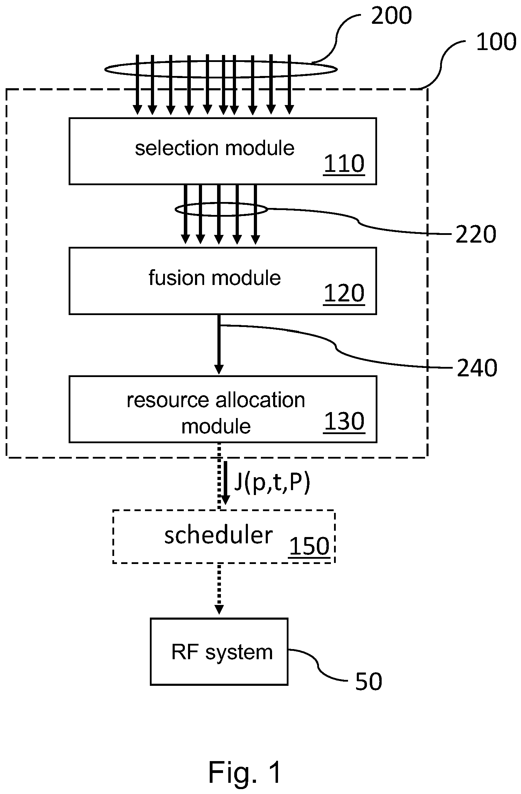

**Fig. 1** depicts an apparatus 100 for managing resources of a RF system 50 (multifunctional or single-functional). The RF system 50 maybe designed to carry out various (distinct) tasks 200 (e.g. tasks of a multifunctional radar). The apparatus 100 comprises a selection module 110, a fusion module 120, and a resource allocation module 130. The selection module 110 is configured to select candidate tasks 220 from the various tasks 200, wherein the candidate tasks 220 are suitable to be fused into a fused task 240. The fusion module 120 is configured to fuse the candidate tasks 220 into the fused task 240 (or into multiple fused tasks). The resource allocation module 130 is configured to generate one or more jobs J to perform the fused task 240. In addition, the resource allocation module 130 may allocate at least one resource to execute the one or more jobs J. The jobs J may be associated with parameter values $\vec{p}$ and/or the execution time t and/or a priority P, etc. which are set for their execution.

These parameters may include one or more of the following parameters: a pulse repetition frequency, a center frequency, a frequency bandwidth, a polarization, a pulse modulation, a pulse length, a number of pulses, a radiated power and peak power, a revisit interval, an earliest time for execution, a desired time for execution, a latest time for execution, a beam shape (emission & reception), a beam direction, a subarray-structure, an amplification on receive. A person skilled in the art will understand that by adapting these parameters it will become possible to fuse different tasks within a single task characterized by a common waveform, which will be described in more detail below.

According to further embodiments, tasks 200 that are not selected for fusion by the selection module 110 as candidate tasks 220 can be directly forwarding to the resource allocation module 130 (e.g. bypassing the fusion module 120).

According to further embodiments, the apparatus comprises a scheduler 150 configured to schedule the jobs J based on the set parameter values $\vec{p}$.

Therefore, according to embodiments, a fusion of tasks, not of jobs, is performed. The terms "job" and "task" maybe defined as follows. A "task" may refer to an abstract description of something which should be done. It defines objectives that should be achieved and typically combines these with a task priority that indicates how important the objectives are, e.g. related to a mission success. As such, the task does not occupy any physical resources and does not change the state of the system. This means, when processing constraints are neglected, an infinite number of tasks can exist in parallel on one system.

In contrast to a "task", a "job" is a concrete description of something which should be done, and it comprises defined values for all necessary parameters that are set for job execution (including potential limitations to the execution time) together with a job priority that allows the scheduler to decide which job will be actually executed in case of collisions of jobs (i.e. jobs that would use the same resource at the same time). When a job is executed, physical resources are used to improve the state of the system that executes the job. The references for this improvement are the objectives as defined in the allocated task. This means that only a limited number of jobs can be executed in parallel.

For example, a task may have to be performed using the RF system to achieve a goal and may principally be arbitrary. Examples are tracking an already known target, cooperative or non-cooperative identification of targets or scanning the hemisphere to find new targets. Tasks should not be limited to tasks in connection of observing objects. Further tasks may include a jamming of another RF system or a communication using the radar beam.

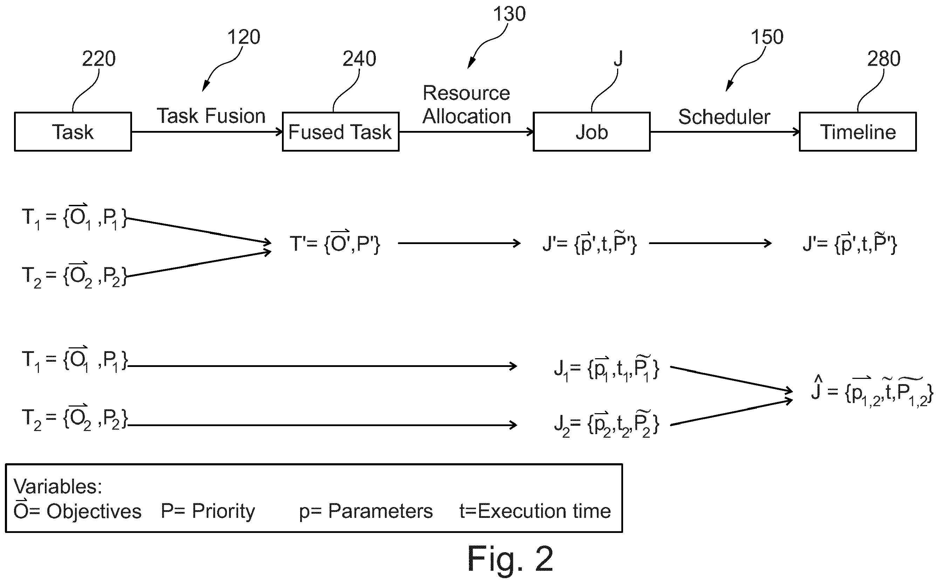

**Fig. 2** illustrates the operation of embodiments in more detail. Separate candidate tasks 220 are shown at the beginning and the processing ends on a timeline 280, where a concrete assignment defines at which time which jobs will be executed.

In the first step, the candidate tasks 220 are subject to a task fusion (by the fusion module 120) resulting into a fused task 240. The fused task 240 is then subjected to a resource allocation (by the resource allocation module 130) resulting into one or more jobs J. Furthermore, a scheduler 150 schedules the jobs J into the timeline 280 by assigning each job J with a particular time t of execution. The resource allocation downstream the task fusion is combinable with any kind of resource allocation and scheduling scheme as the output of the task fusion is again a task, which maybe indistinguishable from the original tasks 220. Again, tasks 200 that are not selected for fusion can be directly forwarded to the resource allocation module 130 (e.g. bypassing the fusion module 120).

The second line indicates the procedure according to embodiments in comparison to a conventional procedure for generating jobs illustrated in the third line. According to embodiments, a first task T1 is associated with a first objective O1 and a first priority Pi, and a second task T2 is associated with a second objective O2 and a second priority P2. The first objective O1 and second objective O2 indicate the purpose of the corresponding task, for example, performing a radar search for particular targets or performing a communication with another participant.

According to embodiments, the first task T1 and the second task T2 are merged into a fused task T' that may be associated with a new objective $\vec{O'}$ and/or a new priority P'. The fused task T' is then provided to the resource allocation module 130 for generating corresponding jobs J' to be executed. The created jobs J' may be associated with parameters $\vec{p}$ (representing e.g. a parameter vector), an execution time t and a particular job priority $\tilde{P}$. The scheduler 150 will schedule the jobs J' in accordance with their execution time within the timeline 280 (e.g. in a desired order).

In comparison to described embodiment, in a conventional resource allocation system, the first task T1 and the second task T2 are directly forwarded to a conventional resource allocation module which creates a first job J1 and the second job J2 as function of respective parameters $\vec{p1}, \vec{p2}$ the times of execution ti, t2, and corresponding job priorities $\widetilde{P1}, \widetilde{P2}$. Then, the created jobs J1, J2 are merged into a fused job $\hat{J}$ which is characterized by a parameter vector $\vec{p12}$ an execution time, and a fused priority $\widetilde{P12}$. The existing approaches do not have the function "Task Fusion" and the generated jobs are interleaved/fused only in the scheduler.

Therefore, according to embodiments, the function "task fusion" is newly introduced to fuse the tasks 220 resulting in fused tasks 240. This is performed before the resources are allocated. In other words, for these fused tasks 240 the resources are allocated resulting in jobs which are scheduled by the scheduler 150. The result of this procedure is the timeline 280 which can be executed. One advantage of fusing tasks 220 before they are used in the resource allocation, is the decrease in the number of tasks which have to be handled in the following functions. In the end, this may accelerate the processing all tasks. In particular, the fusion of tasks before the jobs are generated allows a more efficient utilization of resources.

The fused task T' may be associated or characterized by a new objective $\vec{O'}$ and a new priority P'. For determining the new priority P' of the fused tasks T', embodiments may consider the priorities Pi, P2 of the first task T1 and of the second task T2 as well as the fact that, if the fused task receive no resource and the resulting jobs would not be executed, two original tasks T1, T2 would not receive resource. Thus, the new priority P' should be higher than both individual priorities P1, P2.

For the generation of the new objectives $\vec{O'}$ of the fused tasks, one may distinguish between the following three different types of fused tasks T'.

In the first case, the objectives O1, O2 of the input tasks T1, T2 are fused without change in the new joint objective vector $\vec{O'}$. For example, the objectives O1, O2 may be of different nature such as a radar communication and a tracking of a target. Both objectives have to be achieved independently from each other and each objective O1, O2 may be related to a different waveform of the radar beam. The waveform may thus change within one task. The fusion could result in interleaved or sequential waveforms within one job/task. This may happen especially if the objectives cannot be fulfilled using one waveform with an adequate utility. On the other hand, the waveform parameters like pulse repetition frequency may jointly be adapted to achieve both tasks combined by interleaving jobs. This would not happen in conventional resource management systems where the waveforms contained in a job are already fixed by the preceding resource allocation and have to be combined as-is.

Therefore, according to embodiments, interdependencies between the objectives O1, O2 as well as the waveforms may be considered. The possibility of adaptations of the parameters (Pi, P2 → P') allows interleaving also of more waveforms and leads to an overall efficiency gain or makes interleaving even possible. In addition, for RF systems such as systems with shared apertures, task fusion may allow parallel usage of the apertures without causing mutual interference. In this concept, strong interdependencies between the waveforms radiated with individual apertures exist that are, according to embodiments, considered during the waveform selection process. The size of the resulting apertures (sub-apertures) can also be part of a parameter optimization process including a waveform selection process.

In the second case, the objectives O1 O2 are fused by adaption. Therefore, the new objectives $\vec{O'}$ are to be generated. For example, from two similar objectives (one in each input task O1, O2), one new objective is created that is utilized within the fused task T'. This typically results in an adaption and/or modulation of the waveform on job level compared to the jobs that would result from individual tasks which allows a more efficient and truly simultaneous execution of tasks. It is important to note that this fusion allows that the parameters P' can be adjusted to the new objectives $\vec{O'}$ of the new fused task T'. However, when applying this procedure, embodiments ensure that only the new objective but likewise all individual objectives O1 O2 are achieved.

The third type of fused tasks is a combination of both, the first and the second type.

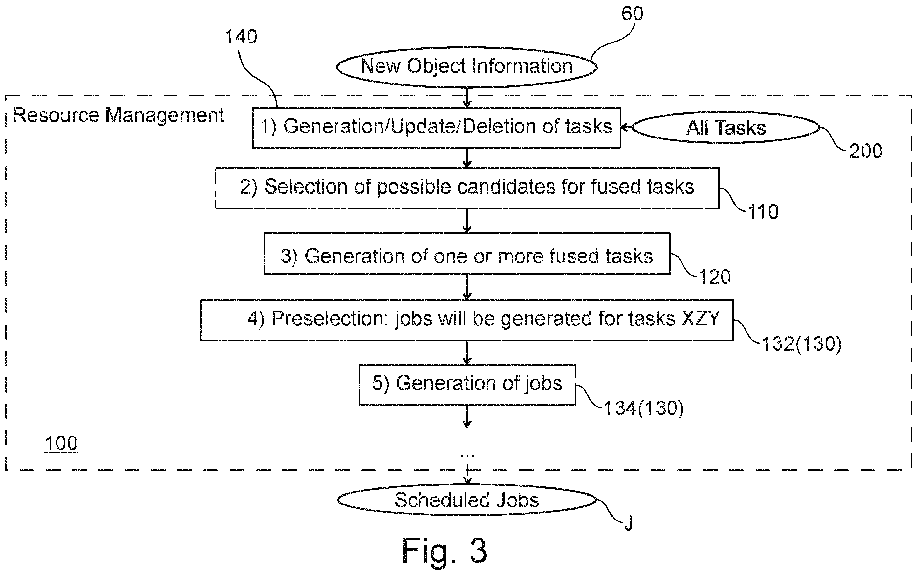

**Fig. 3** depicts another embodiment for the apparatus 100 of managing resources representing a functional architecture of resource management with more optional components.

In this embodiment the apparatus 100 includes, in addition to the selection module 110, the fusion module 120, and the resource allocation module 130, the scheduler 150 (see Fig. 1, not shown in Fig. 3), a task acquisition unit 140. The task acquisition unit 140 is configured to provide the various tasks 200. The acquisition of tasks may include generating one or more tasks and/or updating one or more tasks and/or deleting one or more tasks from a list of tasks. The task acquisition unit 140 may be controlled based on new or modified object information 60, which may trigger the generation of a new task. The object information indicates, e.g., that a new target has been identified and needs to be tracked, a friendly partner requests a communication link, or other changes in the environment.

In addition, the resource allocation module 130 includes in this embodiment a preselection module 132 and a generation module 134. They may be submodules of the resource allocation module 130 or may be formed as dedicated separate units. The preselection module 132 is configured to preselect for which tasks jobs are potentially generated. The generation module 134 is configured to generate the concrete job(s) for the set of (fused) tasks XZY.

Therefore, when compared to a conventional resource management framework, two functions are added: "2) Selection of possible candidate tasks for fused tasks" selects the tasks, the candidate tasks 220, from all tasks 200 already generated which can possibly be fused (this function is provided by the selection module 110), and "3) Generation of one or more fused tasks" generates the fused tasks 240 based on the candidate tasks 220 (this function is provided by the fusion model 120). Both functions can be realized in a rule-based as well as in an optimization-based way.

According to embodiments, the proposed task fusion process may result in corresponding jobs that are executed sequentially or as an interleaved operation. Therefore, in the process of allocating resources for the execution of corresponding jobs J, an optimization process may be implemented in which parameters p of the corresponding jobs may be changed (based on the fused task) in a way that a sequential or interleaving version can emerge. Embodiments may select the sequential or the interleaved execution based on which one is beneficial for the whole system (provides more utility). For example, a job related to two fused tracking tasks can be an interleaved version or a sequential version of the jobs of the non-fused tasks, depending on the result of the optimization process.

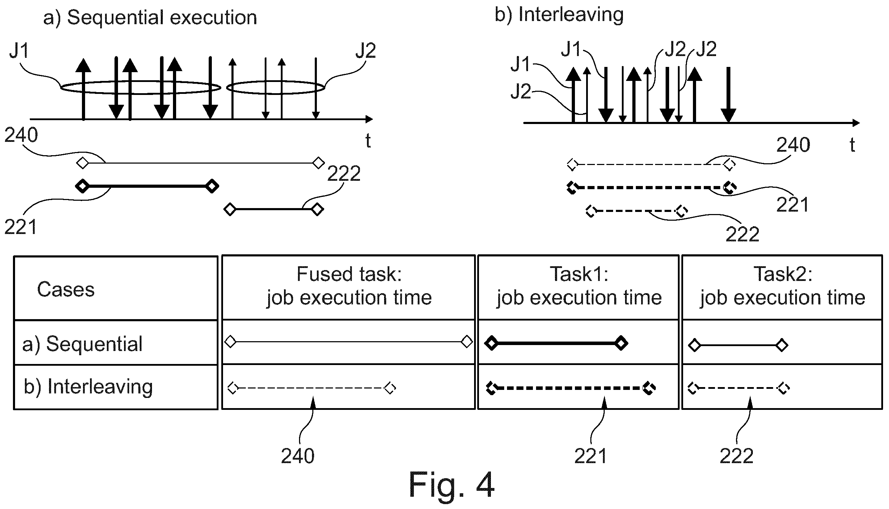

**Fig. 4** provides a schematic illustration of the exemplary two types of job executions, sequential and interleaving execution, corresponding to a fused task 240 that is obtained from two (non-fused) tasks: a first task 221 and second task 222, wherein the reference signs in Fig. 4 indicate the job execution times for the fused task 240, the first task 221 and the second task 222. For simplicity the job execution times are marked with same reference signs as the corresponding task. The corresponding first jobs J1 (for the first task 221), second J2 (for the second task 222) include some emissions (arrow up) and receptions (arrow down) of RF signals. As explained before, the first and second tasks 221, 222 are on an abstract level (e.g. a radar search, radar tracking, jamming, etc.) and the jobs J1, J2 are the concrete activities carried out to achieve the tasks 221, 222 (e.g. to transmit signals with a particular rate in a particular direction with a particular characteristic).

In addition to the aforementioned preselection, the fusion of tasks according to embodiments offers the possibility of sequential and nested or interleaved execution. Thus, embodiments achieve an optimal utilization of resources by balancing fused and non-fused tasks.

On the left-hand side, the first and second jobs J1, J2 are executed sequentially meaning the first jobs J1 associated to the first task 221 are executed first. Thereafter, the second jobs J2 associated to the second task 222 are executed. The time needed for performing the fused task 240 is the sum of the time needed for the first task 221 and for the second task 222 (see second line).

On the right-hand side, the first and second jobs J1, J2 are executed in an interleaving way meaning the second jobs J2 associated to the second task 222 are executed at times where none of the first jobs J1 associated to the first task 221 is executed. For this, the time periods between subsequent emissions/receptions for the first jobs J1 may be slightly enlarged to have enough time therebetween for the emissions/receptions belonging to the second jobs J2. This enlargement is possible, because the fused task determines the parameters of both jobs jointly. An approach, which solves this problem solely on the scheduler level would have received two jobs with a fixed emission/reception pattern, which could be either interleaved or not. However, it would not have been able to modify the jobs, as it has no knowledge about the original task which the job was intended to perform.

As can be easily recognized from the third line, in case a), the jobs J1, J2 related to the fused task 240 receive a lot of resources (in particular time) when compared to case b). Therefore, a sequential execution of the jobs related to task 221 and task 222 is possible, but may be less beneficial (if time matters). In case b) there are fewer resources needed and therefore an interleaving is beneficial, because the necessary execution time for the jobs J1, J2 related to the fused task 240 is reduced. However, the time for the execution for the first job J1 related to first task 221 is longer in this example. If it is desirable to finalize the first task 221 as soon as possible (e.g. an urgent communication or to neutralize an imminent threat by jamming), then the sequential execution in case a) may be more beneficial. Therefore, also the priority may be considered in the decision of how the fusion is implemented.

The decision which tasks shall be used and which not, is in general easier. This decision can be made based on an optimization using a utility function or cost function that may depend on the various criteria such as an efficient use of resources such as time, priority of the task, etc. The utility measures a preference of a particular configuration or setup and the cost function measures the involved costs for a setup.

In this optimization-based way, also artificial intelligence can be used. An initial training can be done based on a set of well-defined scenarios for which a preferred solution is known. Another simple way would be to combine a training and an evaluation of the results without a preferred solution. In addition, further improvements can be obtained when using the system (or an adequate model), e.g. by providing an explicit feedback. Moreover, if utility calculations are used, the utility function of the fused tasks 240 can comprise a combination of the two utility functions of the non-fused tasks 221, 222 as well as a newly calculated utility function based on requirements of both tasks 221, 222.

According to embodiments, the allocation of resources can be based on one or more of the following:

- rule-based resource management,
- quality of service resource management with time interval optimization,
- quality of service resource management with time-dependent utility,
- other optimization-based resource management systems.

A first possibility is a rule-based resource management. One such rule could be that a fused task 240 is generated if certain parameter values are reached (e.g. a threshold is exceeded). An example would be that the targets are sufficiently close to each other or needed waveforms are (expected to be) sufficiently similar. These parameter values (thresholds) can be determined in advance and ensure that the fusion is beneficial. Then, the jobs J for this fused task 240 can be generated. If this task 240 has to be repeated a corresponding check mark will indicate to the acquisition unit 140 whether or not the fused task 240 should be deleted (because it has already been executed). It is also possible that the fused task 240 can be executed in a sequential or an interleaved way by additionally implemented rules if the amount of resources allows this. This rule-based resource management may thus decide whether tasks can in principle be fused - independently of its benefits.

The second possibility relates to a quality of service (QoS) resource management with optimization over a receding horizon. Here, the fused task 240 is generated if it is decided that it is beneficial. The fused task 240 may comprise a timeframe within which it is valid (for example a certain time period for tracking/jamming of targets). If this time interval is suitable to the optimization time interval of the resource management, jobs J for this (fused) task 240 will be generated using a QoS approach. If the fused task 240 does not exist anymore (e.g. the corresponding target has disappeared), non-fused tasks may be used in the following timesteps.

The concrete decision about the fusing and how to generate the jobs J can be realized by the calculation of suitable metrics or by an optimization procedure. The metrics may be defined by a set of parameters which are of relevance for the decision (e.g. parameters defining the RF beam such repetition rate, beam width, orientation, etc.). The optimization may have the goal to perform as many tasks as possible within a given time period, for which an artificial intelligence as well as other techniques and methods may be utilized (as mentioned already above).

The third possibility relates to a QoS resource management system with time-dependent utility. Here, the fused task 240 is again generated if the system decides it is beneficial. The fused task 240 may again comprise a timeframe within which it is valid, but which is now time-dependent. It may exist only for a certain period. For example, if two flying objects are close enough to each other (e.g. within a beam width) and tasks related to the objects can be fused. Therefore, the utility itself becomes time dependent. Again, the jobs for this (fused) task 240 may be generated using a QoS approach using this time-dependent utility. In this case, the scheduler functionality is already part of the globally optimized job selection due to the time dependent utility. As for the previous case, if the fused task 240 does not exist anymore, the non-fused tasks will be used in the following timesteps. The concrete decision about the fusing and how to generate the jobs J can again be realized by calculating suitable metrics or by an optimization procedure. The optimization may have the goal to perform as many tasks as possible within a given time period. Again, an artificial intelligence as well as other techniques and methods may be utilized.

Finally, there are other optimization-based resource management systems that can be utilized in embodiments. It does not depend on the kind of optimization.

Although the embodiments described so far rely mainly only on a single sensor resource management, further embodiments utilize resource managements on a complete network level, group level, platform level, and sensor level. Further embodiments apply the concept of fused tasks on each of these levels. Therefore, according to further embodiment the RF system 50 maybe a system with different sensors (e.g. multiple radars, surveillance units, cameras, etc.) that are configured to perform different tasks.

Exemplary tasks that can be utilized in embodiments are:

- radar search tasks, wherein a search for targets in a certain volume using the radar functionality is performed;
- radar tracking tasks, wherein a tracking of one or more target(s) using the radar functionality is performed;
- jamming tasks, wherein a jamming of a target is performed;
- ESM tasks (ESM = electronic support measures), wherein an ESM-search or an ESM-tracking is performed (the same task name may be used because they can be regarded as equal from the fused-task-view);
- COMMS tasks, wherein a communication (COMMS) with another system or participant is performed.

The following embodiments relate to concrete realization for particular radar tasks to provide a better understanding and to make the advantages more apparent. In these realizations it should be understood that the decision to make may be complex and resource consuming. Therefore, according to embodiments, the number of (candidate) tasks 220 which could be fused to one fused task 240 may be limited. Otherwise, the computational complexity would increase dramatically with the number of tasks 220 and this could prevent the ability to react in real time. The possibility of sequential or interleaved execution on job level may exist for all resource management types mentioned in the following. It is further understood that the process described for one fused task 240 in the following can also be performed for several fused tasks 240. Finally, tasks which are not part of the fusion are not mentioned for simplification, but they may exist.

The fused tasks 240 comprise two or more tasks which can be executed in a fused style as described before, wherein fused tasks 240 can be generated e.g. for a fusion marked with the letter of the corresponding table below ("-" does not exclude the combination but it means that this combination is not described below):

| Task | Radar Search | Radar Tracking | Jamming | ESM | COMMS |
|---|---|---|---|---|---|
| Radar Search | - | a) | - | k) | h) |
| Radar Tracking | a) | b) | c) | d) | e) |
| Jamming | - | c) | f) | 1) | g) |
| ESM | k) | d) | 1) | - | i) |

(continued)

| Task | Radar Search | Radar Tracking | Jamming | ESM | COMMS |
|------|-------------|----------------|---------|-----|-------|
| COMMS | h) | e) | g) | i) | j) |

In the following, particular examples of the fusion of tasks are described in detail which may be realized in embodiments of the apparatus 100.

A. Fusion of one search task and one or more suitable tracking tasks

There may be multiple objects in a search beam of the RF system 50. This allows to execute simultaneously one search task and one or more suitable tracking tasks within a fused task 240. According to embodiment, the emission of the search beam will be adapted to both tasks by adapting the radar parameters (e.g. as described with Fig. 4). Based on the capabilities of the RF system 50, while fusing search and track tasks, the search pattern will remain unchanged or adapted to maximize the utility of the fused tasks 240.

B. Fusion of two or more tracking tasks

Due to known echo response times (up to some uncertainty) different tracking emissions can be planned in a way that the RF system 50 emits in a time interval when no echo is expected. This planning is also used to emit signals in a way that the (return) echoes do not hit the antenna at the same time, which is possible, because the approximate distances to the objects might be known. This may be done as described in Fig. 4.

Another possibility is that the target echoes have different frequency ranges/responses or, in the case of a digital RF frontend, the targets can simply be distinguished by the angles under which the echoes are received. For example, the frontend may use a phased array antenna that is able to electronically scan the region of interest and can distinguish signals from different directions. These two possibilities allow the processing of multiple echoes returning at the same time.

C. Fusion of one or more tracking tasks with one or more jamming tasks

The fusion of one or more tracking tasks with one or more jamming tasks allows to track objects while jamming them. This is possible if, for example, one or more jammed objects should be tracked. This works for all jamming techniques and is especially effective if the jamming pulse(s) can also be used for radar operations as, for example, for deception jamming (wherein e.g. enemy radars are deceived, e.g. by transmitting fake return signals).

D. Fusion of one or more tracking tasks with one ESM task

The electronic (warfare) support measures (ESM) may include actions to search for, intercept, identify, and locate sources of radiated electromagnetic energy for the purpose of immediate threat recognition. An ESM task may be executed during the time when no tracking signal(s) is/are emitted. It may also be executed simultaneously to the tracking if the cross modulation can be handled in a suitable fashion so that both signals do not interfere.

E. Fusion of one or more tracking tasks with one or more COMMS tasks

The time slots between the emission and reception of the tracking signals can be used for communication (COMMS). In general, a communication can be any type of data transmission, independently of the content of the transmitted data (encoded voice, video, or other data). Since the data may be transmitted in sufficiently small packets, both tasks may be interleaved.

F. Fusion of two or more jamming tasks

Two or more jamming tasks can be fused if the difference of the azimuth and elevation angles of two or more objects is small and therefore the objects' radars can be jammed jointly.

G. Fusion of jamming task and COMMS task

In the case of a suspect object, this can be jammed with an emission which includes a short communication signal. If the object answers with a suitable or expected signal, the suspect object can be recognized as a friendly object (not hostile). This helps to avoid friendly fire. If an expected answer is missing, the jamming may continue.

### H. Fusion of one or more COMMS tasks and one search task

The search beam is used to communicate with a known object in the beam. This can be done by modulation of a search signal. Therefore, the search radar signal is used as carrier signal on which the communication signal is modulated (as modulation signal).

### I. Fusion of COMMS task and ESM task

If the COMMS task can be executed in defined time slots (also on receive), an ESM task can be executed in the meantime. The ESM task may be interrupted for the slots when the communication will continue.

### J. Fusion of two or more COMMS tasks

If the COMMS task can be executed in defined time slots (also on receive), several COMMS tasks can be interleaved (as time multiplexing). In addition, several communication tasks can be executed simultaneously by other multiplex methods such as frequency multiplexing, space division multiplexing, phase multiplexing, code multiplexing or combinations thereof.

### K. Fusion of one search task and one or more ESM tasks

While waiting for target echoes in a search task, ESM-task(s) can also be executed. For example, the apparatus 100 may control the RF system 50 to be sensitive not only for the expected return echoes of the search task, but to intercept various other RF signals and to provide them to an ESM unit together with a possibly detected direction of reception.

### L. Fusion of jamming task and ESM task

Jamming tasks do not need to be performed continuously, but can be interrupted. Therefore, idle times between subsequent jamming events can be used for ESM tasks or ESM parts. Direct after finishing the ESM parts, the jamming can be continued until new jamming parameters are determined. It is understood that the information derived from the ESM (e.g. a detected frequency communications band) may in turn be used for the next jamming so that the jamming can be based on ESM results.
According to further embodiments, the apparatus 100 is configured to fuse three different task types. For this, the following examples may be realized in embodiments:

### M. Fusion of one or more tracking tasks with one ESM task and one jamming task

The target may be tracked and jammed while the jamming is interrupted by ESM for the determination of suitable jamming waveforms (based on RF signals transmitted by the target).

### N. Fusion of one search task, one or more tracking tasks and one or more COMMS tasks

All tasks are executed using one emission with a suitable modulated waveform as described above.

### O. Fusion of one search task, one or more tracking tasks and one or more ESM tasks

The fusion of the search and ESM task can be expanded by the tracking task of another object, e.g. when it belongs to one of the objects in the search volume.

### P. Fusion of jamming task and COMMS task with a tracking task

In the case of a suspect object, it may be jammed with an emission which contains a short communication (as described before). If the object answers with a suitable signal, it is not hostile. The same setup can be used for the tracking. Also there, the object can be included by a tracking emission that includes COMMS information (e.g. as a modulation signal, where the tracking signal is carrier signal as described before).

O. Fusion of tracking task. ESM task and COMMS task

The ESM task can be interrupted by tracking emissions or responses that may comprise COMMS information. The ESM task may also be interrupted by a tracking emission/echo as well as a COMMS emission/response.

R. Fusion of search task. ESM task and COMMS task

The radar emissions for searches can include communication signals (by modulation) and, in the time, when no signal is emitted, the ESM-task can be performed.

S. Fusion of jamming task. COMMS task and ESM task

Jamming and ESM can be fused as explained above and the jamming signal can include the COMMS information as explained in the jamming/COMMS fusion above.

T. Other fusions

In principle other fusions are also conceivable. For example, fusing search-tracking-jamming; fusing search-jamming-ESM; fusing search-jamming-COMMS. These task fusions may be possible if the search-track-emission is in another frequency range than the jamming and if the parallel emission and reception in different frequency ranges is possible in the particular RF system 50.

According to further embodiments, the fusion of four different task types is also possible. In this case, for example, one search task, one ESM task, and one or more COMMS tasks as well as one or more tracking tasks may be fused. For example, the tracking objects may be in the search volume and the object, which should be part of communication, may also be there. The waveforms used for the COMMS and tracking tasks may be adapted in the fusion taking into account requirements for the search waveform.

According to embodiments, the fusion as described before may be carried out by the fusion module 120 and/or the resource allocation module 130.

Finally, an exemplary implementation for the selection module 110 will be described in more detail, which performs the step of "selection of possible candidate tasks for fused tasks" (see Fig. 3). Although the following will be presented for the case of fusion of exactly two tasks, it is understood that the fusion of any number of tasks is likewise possible.

In general, the RF system 50 may have to perform various tasks and it has to be decided which of them can reasonably be fused. According to embodiments, two tasks T1 and T2 may be fused, if a cost function C(T1,T2) is below a certain threshold. More concretely, tasks may be fused in a way that minimizes the total cost C of (all) fused task 240.

An exemplary cost function could be the difference in angular space between the tasks (e.g. if the targets are located close to each other in the surveillance area). Other cost functions can also be used, e.g. the degree of compatibility of the waveforms. This naturally leads to a representation of the problem in form of a graph, where the candidate tasks 220 for merging correspond to the nodes, the edges to potential task fusions and the weights of the edges to the cost functions.

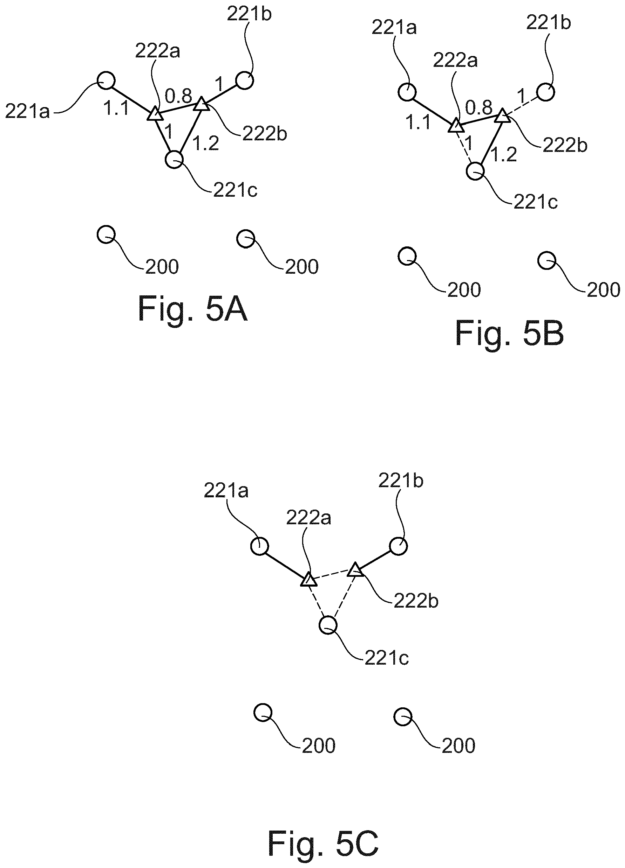

**Fig. 5A** depicts a formulation of the task fusion problem as a graph as it may be used in embodiments. More concretely, an exemplary instance of such a graph is shown with five search tasks 221a, 221b, 221c, 200 and two tracking tasks 222a, 222b. The nodes are drawn in a way that their distance represents the weights (cost of merging them), which may be associated with the angular distance in space or the degree of adaptations of the waveforms when performing the tasks 221, 222.

There are multiple possibilities to fuse tasks, wherein five possible fusions have been indicated by the link connections. Only those tasks are connected by links which are potentially fusible as described before. Therefore, the tasks 200 may not (yet) qualify for a fusion with at least one of the other tasks, but may be performed separately. The numbers on the links indicate the costs when merging the connected nodes. The solution to the problem of fusing the tasks 221, 222 in an optimal way can then be found e.g. via the minimum maximal matching of the graph. This is the maximal matching, which covers the maximal number of nodes, having the minimal cost of all those matchings.

**Fig. 5B** shows a solution indicated by dashed line of matching (minimum maximal) for the graph, namely that the second search task 221b is to be fused with the second tracking task 222b (having a weight "1"). In addition, the third search task 221c is to be fused with the first tracking task 222a (also having a weight "1"). Therefore, the total cost would be "2" for the two fusions and thus the selection module 110 would select these tasks 221b-222b and 221c-222c for the generation of fused tasks 240. The first search task 221a as well as the remaining tasks 200 have to be performed separately. The concrete fusion may be carried out as described before. All other possible fusion of two tasks would result in more costs.

According to embodiments, further extensions are possible. One possible extension would be to convert this into a multi-step process, where first all tasks below a certain threshold are fused (in a rule-based way) and then all possibly fusible tasks. This would make sure that very good fusible tasks are fused, even if this does not maximize the number of task fusions.

In addition, according to further embodiments, it is also possible to fuse multiple tasks or an arbitrary number of tasks. In these cases, the same formulation in terms of graphs may be utilized, where the nodes represent tasks, that are connected when they are fusible. According to embodiments, a cost function specific example of possible fusion criterion may be the following. If each pair of three tasks are fusible with each other, then all three may also be fusible altogether. For example, such a criterion would be to define an upper threshold or a maximal distance in angular space for tasks in which all three tasks have to be performed. In other words, if all three tasks are sufficiently close to each other, they can be handled by a single radar dwell and thus may be fused.

**Fig. 5C** depicts an embodiment for this implementation using a graph clique which defines a subset of nodes of a graph with each node of the subset being connected by respective link to all other nodes in the subset. For the example shown in Fig. 5A, a clique would be represented by the third search task 221c together with the two tracking tasks 222a, 222b. However, the first and second search tasks 221a, 221b are not part of a clique.

Therefore, according to embodiment, after having setup the graph of linked nodes representing fusible tasks, the selection module 110 may search for a clique in the graph, i.e. a set of nodes that each has an edge to the other nodes in the clique (tasks 222a, 222b, 221c is the depicted example).

In general, the problem of finding cliques is NP-hard, i.e. belongs to problems that are by the current state of the art assumed to be not solvable in polynomial time. However, in special cases such cliques are easier to find. For example, when the edges are based on a distance criterion (e.g. the angular distance), the graph is called a circular intersection graph and efficient solutions in $O(n^2)$ exist, where n is the number nodes and the solution can be found in a polynomial (here quadratic) timeframe.

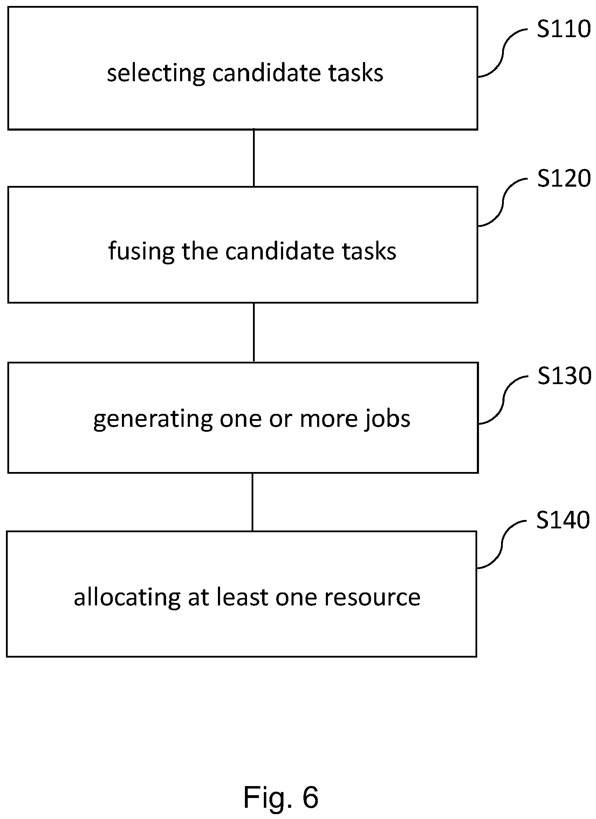

**Fig. 6** shows a schematic flow chart for a method for managing resources of a multifunctional RF system 50. The RF system 50 being designed to carry out various tasks 200. The method comprising the steps:

- selecting S110, e.g. by the section module 110, candidate tasks 220 from the various tasks 200, wherein the candidate tasks 220 are suitable to be fused into a fused task 240;
- fusing S120, e.g. by the fusing module 120, the candidate tasks 220 into the fused task 240;
- generating S130, e.g. by a resource allocation module 130, one or more jobs J to perform the fused task 240; and
- allocating S140, e.g. by the resource allocation module 130, at least one resource to execute the one or more jobs J, wherein the jobs J are associated with parameter values p which are set for their execution.

According to further embodiments, all functions described previously in conjunction with the apparatus 100 or the resource allocation management may represent additional, optional method steps.

Furthermore, this method may also be a computer-implemented method. A person of skill in the art would readily recognize that some or all steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

In summary, major aspects of embodiments relate to the following:

A resource management algorithm according to embodiments combines the following two functional components: (i) selection of candidate tasks 220 for task fusion, (ii) generator for fused tasks 240.

The resource management algorithm can be any algorithm such as rule-based, QoS (quality of service), Quality-based resource allocation management (Q-RAM) or an optimizer.

The task fusion, by the task fusion module 120, can be based on interleaved tasks, merged tasks, or both.

The selection of candidate tasks 220, by the selection module 110, can be performed using methods based on rules, optimizers, graphs, artificial intelligence or other automatic selection methods.

The generator of fused tasks 240, by the fusion module 120, can be implemented using rules or optimization methods.

The candidate tasks 220 to be fused, by the fusion module 120, can include the combinations as defined previously that are specific to a multifunction RF system.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embod-

iment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner. With the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

List of reference signs

| | |
|---|---|
| 50 | multifunctional RF system (e.g. a multifunctional radar system) |
| 60 | object information |
| 100 | apparatus for resource management |
| 110 | selection module |
| 120 | fusion module |
| 130 | resource allocation module |
| 132 | decision (sub-) module |
| 134 | generation (sub-) module |
| 140 | task acquisition unit |
| 150 | scheduler |
| 200 | (different) tasks |
| 220 | candidate tasks (tasks suitable for fusing) |
| 240 | fused task(s) |
| 280 | timeline |
| J | job(s) |
| P, P' | priorities of tasks |
| $\vec{p}$ | parameters characterizing the job(s) |
| O, O' | objectives of tasks |

**Claims**

1. An apparatus (100) for managing resources of a multifunctional radio frequency, RF, system (50), the RF system (50) being designed to carry out various tasks (200), the apparatus comprising:

   a selection module (110) configured to select candidate tasks (220) from the various tasks (200), the candidate tasks (220) being suitable to be fused into a fused task (240);
   a fusion module (120) configured to fuse the candidate tasks (220) into the fused task (240);
   a resource allocation module (130) configured to generate one or more jobs (J) to perform the fused task (240) and to allocate at least one resource to execute the one or more jobs (J), wherein the jobs (J) are associated with parameter values (p) which are set for their execution.

2. The apparatus (100) according to claim 1, further comprising a task acquisition unit (140) configured to provide the various tasks (200) by at least one of the following:

   - generating one or more tasks,
   - updating one or more tasks,
   - deleting one or more tasks from a list of available tasks.

3. The apparatus (100) according to claim 1 or claim 2, further comprising a scheduler (150) configured to schedule the jobs (J) based on the set parameter values (p).

4. The apparatus (100) according to one of claims 1 to 3, wherein the fusion module (120) is configured to fuse the candidate tasks (220) based on a utility function or a cost function.

5. The apparatus (100) according to one of claims 1 to 4, wherein the selection module (110) and/or fusion module (120) are further configured to select the candidate (220) for fusing or to process the fusing of the selected candidate tasks (220) based on one of the following:

    - a rule defining that a predetermined value of one of the parameters is reached or another event,
    - an optimization of a quality of service based on a utility for a predefined time interval,
    - an optimization of a quality of service based on a time-dependent utility,
    - a matching analysis of a graph or of a clique included in the graph, when the tasks (200) are grouped in a graph.

6. The apparatus (100) according to one of claims 1 to 5, wherein the tasks (200) are associated each with a task priority (P) and/or a task objective (O),
    the fusion module (120) being configured to define a new priority (P') and/or a new objective (O') for the fused task (240), which differ from the task objective (O) and/or from the task priority (P) or remain unchanged.

7. The apparatus (100) according to one of claims 1 to 6, wherein the fusion module (120) is further configured to fuse a first task (221) with a second task (222) by at least one of the following:

    - generating a common waveform of an RF signal based on the parameter values (p),
    - adapting at least one of the following parameter values (p): a pulse repetition frequency, a center frequency, a frequency bandwidth, a polarization, a pulse modulation, a pulse length, a number of pulses, a radiated power and peak power, a revisit interval, an earliest time for execution, a desired time for execution, a latest time for execution, a beam shape, a beam direction, a subarray-structure, an amplification on receive,
    - generating a signal modulation including carrier signal and a modulation signal, wherein the carrier signal is associated with the first task (221) and the modulation signal is associated with the second task (222),
    - performing a signal multiplexing for first signals associated with the first task (221) and second signals associated with the second task (222), wherein the multiplexing may be at least one of the following: time multiplexing, frequency multiplexing, spatial multiplexing, code multiplexing, phase multiplexing.

8. The apparatus (100) according to one of claims 1 to 7, wherein one of the parameter values (p) define a waveform which is transmitted by the RF system (50) and which is utilized to perform the candidate task (220),
    the resource allocation module (130) being further configured to modify the respective parameters associated with the fused task (240) to enable an interleaved and/or a sequential execution of the jobs (J) generated to perform the fused task (240).

9. The apparatus (100) according to one of claims 1 to 8, wherein the resource allocation module (130) is configured to associate as parameter values (p) at least one of the following:

    - an indication to operate the RF system (50) in a pulsed or continuous operation mode,
    - a repetition frequency,
    - a length or duration of a signal train,
    - an idle time between subsequent transmissions,
    - an aperture of the RF system (50),
    - a beam width of a transmitted RF beam,
    - an azimuth angle and/or an elevation angle of a main lobe.

10. The apparatus (100) according claim 8 or claim 9, wherein the resource allocation module (130) is configured:
    when associating or modifying parameter values, to trade off a possibly lower quality of fused candidate tasks (220) with the overall efficiency in performing all tasks (200).

11. The apparatus (100) according to one of claims 1 to 10, wherein the selection module (110) is configured to select as the candidate tasks (220) from a list of tasks (200) including one or more of the following tasks (200):

    - an active search for objects or targets,
    - a passive search for objects or targets
    - an active tracking of objects or targets,

- a passive tracking of objects or targets,
- a jamming of targets,
- an electronic countermeasure,
- a communication.

12. A method for managing resources of a multifunctional radio frequency, RF, system (50), the RF system (50) being designed to carry out various tasks (200), comprising:

selecting (S110) candidate tasks (220) from the various tasks (200), the candidate tasks (220) being suitable to be fused into a fused task (240);
fusing (S120) the candidate tasks (220) into the fused task (240);
generating (S130) one or more jobs (J) to perform the fused task (240); and
allocating (S140) at least one resource to execute the one or more jobs (J), wherein the jobs (J) are associated with parameter values (p) which are set for their execution.

13. A computer-readable storage medium comprising instructions which, when executed by a data processing machine, cause the machine to perform the method of any of claims 12.

Fig. 1

220     120     240     130     J     150     280

| Task | → Task Fusion → | Fused Task | → Resource Allocation → | Job | → Scheduler → | Timeline |

$T_1 = \{\vec{O}_1, P_1\}$
$T_2 = \{\vec{O}_2, P_2\}$ → $T' = \{\vec{O'}, P'\}$ → $J' = \{\vec{p'}, t, \widetilde{P'}\}$ → $J' = \{\vec{p'}, t, \widetilde{P'}\}$

$T_1 = \{\vec{O}_1, P_1\}$ → $J_1 = \{\vec{p}_1, t_1, \widetilde{P}_1\}$
$T_2 = \{\vec{O}_2, P_2\}$ → $J_2 = \{\vec{p}_2, t_2, \widetilde{P}_2\}$ → $\hat{J} = \{\vec{p}_{1,2}, \tilde{t}, \widetilde{P}_{1,2}\}$

Variables:
$\vec{O}$ = Objectives    P = Priority      p = Parameters     t = Execution time

Fig. 2

60

140

New Object Information

**Resource Management**

1) Generation/Update/Deletion of tasks ← All Tasks

200

2) Selection of possible candidates for fused tasks

110

3) Generation of one or more fused tasks

120

4) Preselection: jobs will be generated for tasks XZY

132(130)

5) Generation of jobs

134(130)

...

100

Scheduled Jobs

J

## Fig. 3

a) Sequential execution

b) Interleaving

J1

J2

240

222

221

J1

J2

J1

J2

J2

240

221

222

t

t

| Cases | Fused task: job execution time | Task1: job execution time | Task2: job execution time |
|---|---|---|---|
| a) Sequential | | | |
| b) Interleaving | | | |

240

221

222

Fig. 4

EP 4 235 416 A1

221b

222a

221a
1.1  0.8  1
222b
1  1.2
221c

200  200

Fig. 5A

221a  221b

222a
1.1  0.8  1
222b
1  1.2
221c

200  200

Fig. 5B

221a  221b

222a
222b
221c

200  200

Fig. 5C

selecting candidate tasks — S110

fusing the candidate tasks — S120

generating one or more jobs — S130

allocating at least one resource — S140

Fig. 6

Europäisches
Patentamt

European
Patent Office

Office européen
des brevets

# EUROPEAN SEARCH REPORT

Application Number

EP 22 15 8554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/302800 A1 (O'SHEA TIMOTHY JAMES [US]) 18 October 2018 (2018-10-18) * the whole document * | 1-13 | INV. G06F9/48 |
| A | US 2014/189702 A1 (YAN WEIZHONG [US] ET AL) 3 July 2014 (2014-07-03) * abstract * | 1-13 | |
| A | US 2020/272509 A1 (WRIGHT KWAME-LANTE [US] ET AL) 27 August 2020 (2020-08-27) * abstract * * paragraphs [0048], [0061] – [0073] * | 1-13 | |

TECHNICAL FIELDS
SEARCHED        (IPC)

G06F

The present search report has been drawn up for all claims

| Place of search | Date of completion of the search | Examiner |
|---|---|---|
| The Hague | 15 July 2022 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 15 8554**

**15-07-2022**

| Patent document cited in search report | | Publication date | Patent family member(s) | | Publication date |
|---|---|---|---|---|---|
| US 2018302800 | A1 | 18-10-2018 | CN | 111247513 A | 05-06-2020 |
| | | | CN | 113791907 A | 14-12-2021 |
| | | | EP | 3612931 A1 | 26-02-2020 |
| | | | KR | 20200024764 A | 09-03-2020 |
| | | | US | 2018302800 A1 | 18-10-2018 |
| | | | US | 2019239085 A1 | 01-08-2019 |
| | | | US | 2021136596 A1 | 06-05-2021 |
| | | | WO | 2018195120 A1 | 25-10-2018 |
| US 2014189702 | A1 | 03-07-2014 | NONE | | |
| US 2020272509 | A1 | 27-08-2020 | CN | 112000458 A | 27-11-2020 |
| | | | DE | 102020101704 A1 | 27-08-2020 |
| | | | US | 2020272509 A1 | 27-08-2020 |

For more details about this annex : see Official Journal of the European Patent Office, No. 12/82